(19) Europäisches Patentamt
European Patent Office
Office européen des brevets

(11) Publication number : **0 602 903 A1**

# (12) EUROPEAN PATENT APPLICATION

(21) Application number : **93309932.7**

(22) Date of filing : **09.12.93**

(51) Int. Cl.$^5$ : **C08L 71/12**, C08K 9/08

(30) Priority : **17.12.92 US 992364**

(43) Date of publication of application :
**22.06.94 Bulletin 94/25**

(84) Designated Contracting States :
**DE NL**

(71) Applicant : **GENERAL ELECTRIC COMPANY**
**1 River Road**
**Schenectady, NY 12345 (US)**

(72) Inventor : **Lupinski, John Henry**
**26 Country Fair Lane**
**Scotia, New York 12302 (US)**
Inventor : **Haaf, William Robert**
**19 Scotch Pine Drive**
**Voorheesville, New York 12186 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Flame retardant polyphenylene ether compositions.**

(57) Flame retardant polyphenylene ether compositions are provided having improved Notched Izod impact strength. There is incorporated into the polyphenylene ether, a rubbery impact modifier, a silicone treated filler, such as clay, and a plasticizer, such as the tetrabenzoate ester of pentaerythritol.

EP 0 602 903 A1

## Background of the invention

The present invention relates to flame retardant polyphenylene ether compositions which can be molded into test bars exhibiting reduced flammability and improved high Notched Izod impact strength. More particularly, the present invention relates to polyphenylene ether blends which include silicone treated fillers, such as clay or fumed titanium dioxide treated with a polydiorganosiloxane fluid, a plasticizer, such as a tetrabenzoate-ester of pentaerythritol, and a rubbery impact modifier such as an ABA block copolymer of styrene and butadiene.

As shown by Talley, U.S. patent 4,645,787, an improvement in the flame retardancy of polyphenylene ether compositions can be achieved by incorporating into the polyphenylene ether, an effective amount of an organothiophosphate, such as triphenylthiophosphate. Yeager et al, U.S. patent 4,757,107, describe the use of an iron halide in a blend of polyphenylene ether and polystyrene to improve the flame retardancy of the blend. As shown by Yeager et al, U.S. patent 4,863,984, an extrudate of a polyphenylene ether blend can be made flame retardant by using an organo amine salt, such as a dibutylamine salt of a Bronsted acid such as hydrogen bromide.

Due to the toxicity and corrosiveness of the thermal decomposition products of phosphorous and/or halogen containing materials, it would be desirable to be able to impart flame retardancy to polyphenylene ether compositions without using such materials.

In copending application, serial no. 07/805,159, filed 12/11/91, it was found that flame retardant polyphenylene ether compositions could be made by blending polyphenylene ether resins with fillers, such as clay modified with a silicone fluid. Experience has shown, however, that even small amounts of inorganic fillers can act as stress concentrators in a polymer matrix and have significant adverse effects on impact resistance.

In U.S. Patent 4,167,507 to Haaf, polyphenylene ether compositions are described having improved impact performance in the form of blends of polyphenylene ether and a hydrogenated ABA block copolymer wherein A is a polymerized monoalkenyl aromatic block and B is a polymeric diene block.

It would be desirable therefore to provide flame retardant polyphenylene ether compositions having improved Notched Izod impact which are also free of phosphorous and/or halogen containing materials.

## Summary of the Invention

The present invention is based on the discovery that improved flame retardance and Notched Izod impact can be simultaneously imparted to polyphenylene ether compositions. Dual beneficial results can be imparted to polyphenylene ether by using a filler, such as clay or fumed titanium dioxide modified with a silicone fluid in combination with a plasticizer, such as tetrabenzoate-ester of pentaerythritol, and an impact modifier, such as an ABA block copolymer of polystyrene and polybutadiene. Suprisingly, it was found that the incorporation into polyphenylene ether of additives, such as the tetrabenzoate-ester of pentaerythritol, and ABA impact modifiers in polyphenylene ether resins did not reduce flame retardance. In addition, measurement of the heat and smoke release rates of combusted polyphenylene ether compositions containing such additives, showed little or no increase in value.

As used hereinafter, the term UL-94 $V_o$ flame retardancy means that the flame retardant polyphenylene ethers and blends have satisfied UL-94 $V_o$ requirements for flamability, as shown by the "Flammability of Plastic Materials Bulletin" of Jan. 24, 1980. More particularly, a 5" x 1/2" x 1/16" polyphenylene ether test bar containing an effective amount as defined hereinafter, of the flame retardant, is suspended vertically over a 3/4" Bunsen Burner flame as provided in the aforementioned UL94 test. The test sample preferably exhibits a UL94 $V_o$ rating which includes the following criteria:

A. Not have any specimen which burn with flaming combustion for more than 10 seconds after application of the test flame.

B. Not have a total flaming combustion time exceeding 50 seconds for 10 flame applications for each set of five specimens.

C. Not have any specimens which burn with flaming or glowing combustion up to the holding clamp.

D. Not have any specimens which drip flaming particles that ignite dry absorbent surgical cotton located 12 inches (305 mm) below the test specimen.

E. Not have any specimens with glowing combustion which persists for more than 30 seconds after the second removal of the test flame.

In addition to satisfying the UL94 $V_o$ requiremments, the flame retardant polyphenylene ether compositions also have been found to have satisfactory heat and smoke release rates when tested in accordance with ASTM-E906-83. The following test can be used:

Polymer plaques (6" x 6" x 1/16") are mounted in the horizontal mode of the test chamber. The environmental test chamber contains a constant flow of air throughout the test. Combustion can be initiated by non-piloted ignition, piloted ignition of evolved gases, or by point ignition on the surface. If ignited by piloted ignition, the end of the burner tubing is placed 10 mm above and perpendicular to the exposed horizontal surface of the specimen. The changes in optical density of the gas leaving the chamber are monitored and from this data, smoke release rates are determined. The results for total smoke evolved and smoke release rates are reported in smoke/square meter of sample and smoke/min square meter respectively. The "Smoke" unit is defined by the concentration of smoke particulates in a cubic meter of air that reduces the transmission of light through a 1 meter path to 10% as measured by a calibrated photometer.

Calculations: Smoke Release Rate = $D/kLA(V_o/t)$ where:

k absorption coefficient - 1.0 squared meter/smoke

D optical density (absorbance) = $\log\left(\frac{100}{\%T}\right)$

L light path - 0.134 m (stack width)

A exposed surface area of specimen, squared meter

$V_o/t$ flow rate of air leaving apparatus cubic meter/min $V_i/t \times T_o/T_i$

$V_i/t$ flow rate of air entering apparatus, cubic meter/min

$T_i, T_o$ absolute temperature of air in and out of apparatus respectively.

## Statement of the Invention

There is provided by the present invention, a flame retardant polyphenylene ether composition having improved Notched Izod impact strength, comprising by weight, from about 65% to about 95% of polyphenylene ether, from about 1% to about 10% of a polydiorganosiloxane fluid-filler blend which is incorporated into the polyphenylene ether as a free-flowing powder to provide from about 0.25% to about 4% by weight of polydiorganosiloxane fluid based on the weight of polyphenylene ether composition, from about 1% to 15% of a plasticizer and about 1% to about 10% of an impact modifier.

The polyphenylene ethers which can be utilized in the practice of the present invention include polyphenylene ethers comprising a plurality of structural units having the formula,

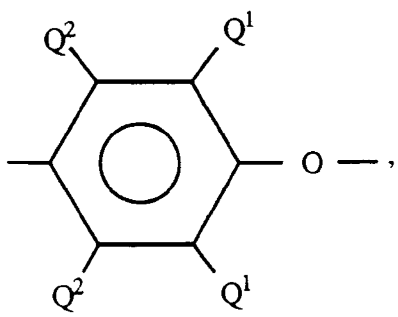

where in each of said units, independently, each $Q^1$ is primary or secondary lower alkyl (i.e., alkyl containing up to 7 carbon atoms), alkenyl, such as allyl, phenyl, aminoalkyl, glycidyl, hydrocarbonoxy, and each $Q^2$ is independently hydrogen, primary or secondary lower alkyl, phenyl, or hydrocarbonoxy as defined for $Q^1$. Examples of suitable primary lower alkyl groups are methyl, ethyl, n-propyl, n-butyl, n-amyl, n-hexyl, n-heptyl. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymer and copolymer polyphenylene ethers are known. The homopolymers include those containing, for example, 2,6-dimethyl-1,4-phenylene ether units. The copolymers include random copolymers containing such units in combination with (for example) 2,3,6-trimethyl-1,4-phenylene ether units. Many suitable random copolymers, as well as homopolymers, are disclosed in the patent literature.

Particularly useful are poly(2,6-dimethyl-1,4-phenylene ethers). Suitable polymers generally have a number average molecular weight within the range of about 5,000-40,000 and weight average molecular weight within the range of about 20,000-80,000, as determined by gel permeation chromatography. Their intrinsic viscosities are preferably in the range of about 0.35-0.6 dl/g, as measured in chloroform at 25°C.

Also known are polyphenylene ethers containing moieties which modify properties such as molecular weight, melt viscosity and/or impact strength. Such polymers are described in the patent literature and may

be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other polyphenylene ethers are coupled polymers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

Polyphenylene ethers are typically prepared by the oxidative coupling of at least one corresponding monohydroxyaromatic compound. Particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. For the most part, they contain at least one heavy metal compound such as a copper, manganese or cobalt compound, usually in combination with various other materials.

Catalyst systems containing a copper compound are disclosed, for example, in U.S. Pat. Nos. 3,306,874, 3,306,875, 3,914,266 and 4,028,341. They are usually combinations of cuprous or cupric ions, halide (i.e., chloride, bromide or iodide) ions and at least one amine.

Other catalyst systems contain manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also known are cobalt-containing catalyst systems. Suitable manganese and cobalt-containing catalyst systems for polyphenylene ether preparation are known in the art by reason of disclosure in numerous patents and publications.

Silicone fluids which can be utilized in the practice of the present invention are polydiorganosiloxane fluids where the organo radicals are attached to silicon by carbon-silicon linkages and the fluids are preferably polydimethylsiloxane fluids or silicone fluids consisting essentially of chemically combined dimethylsiloxy units, with one or more siloxy units such as methoxymethylsiloxy, methylphenylsiloxy units and diphenylsiloxy units. The polydiorganosiloxane fluids can be chain terminated with triorganosiloxy units, such as trimethylsiloxy units, or with diorganosilanol units and can have a viscosity in the range of from about 50 centipose to 10,000 centipose at 25°C. The polydiorganosiloxane fluids can be made by standard hydrolysis procedures from chlorosilanes, such as dimethyldichlorosilane and trimethylchlorosilane, or by equilibration procedures involving the use of cyclic polydiorganosiloxanes such as octamethylcyclotetrasiloxane or hexamethylcyclotrisiloxane and chain stopping disiloxanes, such as hexamethyldisiloxane, and 1,3-divinyltetramethyldisiloxane using an equilibration catalyst, such as acid clay.

Fillers which can be utilized in the practice of the present invention as carriers for the silicone fluid preferably have a particle size in the range of from 10nm to 10μm and include calcined clays such as kaolin, and fumed titanium oxide which can be formed by burning titanium chloride in an oxygen containing atmosphere.

The preferred fillers are clays, such as Satintone 5 or Translink 555 manufactured by the Engelhard Company, Edison, New Jersey and fumed $TiO_2$ from the Degussa Co. In addition, other fillers such as calcium carbonate and carbon black can be used.

The filler can be treated with the polydiorganosiloxane fluid by mixing the polydiorganosiloxane fluid with the finely divided filler in a suitable container using a standard means of agitation, such as by stirring or mechanical mixing. The fluids can be diluted with various solvents e.g., toluene to facilitate mixing. After mixing, the solvent can be removed by evaporation. The amount of polydiorganosiloxane fluid used should not exceed an amount which would interfere with the formation of a free-flowing powder.

Impact modifiers which can be used in the practice of the present invention include block copolymers with the AB or ABA type in which A is a homo or copolymer derived from an alkenyl aromatic hydrocarbon such as styrene, alpha methylstyrene, or vinyl naphthalene and B is a homopolymer or copolymer derived from a conjugated diene such as butadiene, isoprene, and pentadiene. Such block copolymers are described in Kambour, U.S. Patent 3,639,508 and Haaf, U.S. Patent 4,167,507 which are incorporated herein by reference. Such block copolymers can be hydrogenated. Hydrogenation is preferably carried out under conditions which greatly favors the reduction in unsaturation of the aliphatic double bonds over the reduction in unsaturation of the aromatic double bonds. Included among the block copolymers which can be used as impact modifiers are preferably Kraton G1650 resins commercially available from Shell Chemical Co and Vestenamer polyoctanylene rubber from Huls Co..

Plasticizers which can be employed in the practice of the present invention are preferably aromatic or aromatic aliphatic esters of pentaerythritol such as Benzoflex S552 which is the tetrabenzoate ester of pentaerythritol, a product of the Velsicol Chemical Co. Additional plasticizers which can be employed are for example,esters of benzoic, phthalic and trimellitic acids, cumylphenyl benzyl ether (from Kenrich Petrochemicals, Inc.) and bisimides such as,

bisphenol A bis(N-phenylimide),

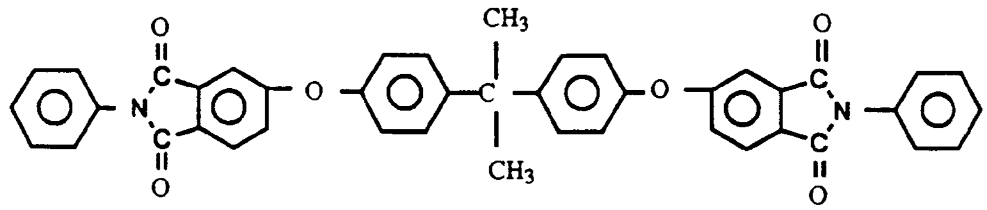

bisphenol A bis(N-methylimide),

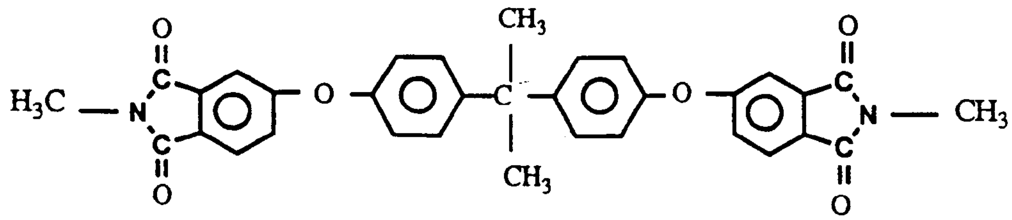

and bisphenol A bis(N-butylimide),

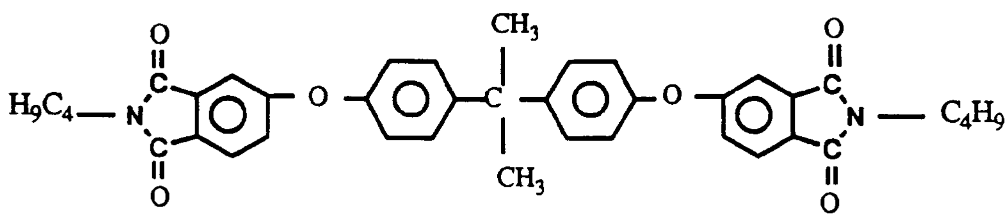

In order that those skilled in the art will be better able to practice the present invention, the following examples are given by way of illustration and not by way of limitation. All parts are by weight.

Examples

A blend of Satintone 5, a clay from the Engelhard Co., and SF 96-50, a polydimethylsiloxane fluid of the Plastics Division of GE, having a viscosity of 50 centipoise at 25°C was prepared. The ingredients were thoroughly blended in a Waring Blender to provide a 4/1 ratio of clay to silicone fluid. The filler-fluid blend was then compounded in a Werner Pfleiderer 28 mm twin screw extruder with varying amounts of a polyphenylene ether, a tetrabenzoate ester of pentaerythritol (Benzoflex S552) of the Velsicol Chemical Co. and a rubbery impact modifier (Kraton G). In addition to Kraton G, Vestenamer 8012, a polyoctanylene rubber from the Huls Co. was also used. Prior to injection molding, the blend was dried for 4 hours at 245°F. Test bars were molded at a temperature range of from 535 to 625°F. The test bars were then evaluated for Izod impact and UL 94 flammability as shown in the following table where the numbers shown are in parts:

TABLE

| | 01 | 02 | 03 | 04 | 05 | 06 |
|---|---|---|---|---|---|---|
| Polyphenylene ether | 80 | 80 | 70 | 70 | 82 | 74 |
| Satintone 5 | 8 | 8 | 8 | 8 | 8 | 8 |
| SF 96-50 | 2 | 2 | 2 | 2 | 2 | 2 |
| Benzoflex S552 | 5 | 5 | 10 | 10 | 5 | 10 |
| Kraton G1651 | 5 | | 10 | | | |
| G1650 | | 5 | | 10 | | |
| Vestenamer | | | | | 3 | 6 |
| Average Notched Izod Impact Strength (ft-lb/in) | 1.39 | 1.32 | 10.28 | 4.95 | 1.88 | 2.41 |
| UL-94 Rating | VO | VO | VO | $V_1$ | VO | VO |
| Average FOT (Secs) | 2.28 | 2.36 | 3.45 | 5.05 | 1.55 | 2.64 |

*It should be noted that the notched Izod impact strength of 100% polyphenylene ether is 0.536.

The above results show that polyphenylene ether compositions having high impact strength and low flammability can be made without the use of a halogen or phosphorous containing flame retardant. In addition, the molded test samples were found to be substantially free of surface imperfections which are normally created due to resin/silicone fluid incompatibility.

Although the above example is directed to only a few of the very many variables which can be employed in the practice of the present invention, it should be understood that the present invention is directed to a much broader variety of flame retardant polyphenylene ether compositions as set forth in the description preceding this example.

## Claims

1. A flame retardant polyphenylene ether composition having improved Notched Izod impact strength comprising by weight, from about 65% to about 95% of polyphenylene ether, from about 1% to about 10% of a polydiorganosiloxane fluid-filler blend which is incorporated into the polyphenylene ether as a free-flowing powder and provides from about 0.25% to about 4% by weight of polydiorganosiloxane fluid based on the weight of polyphenylene ether composition, from about 1% to 15% of a plasticizer and about 1% to about 10% of an impact modifier.

2. A flame retardant polyphenylene ether composition in accordance with claim 1, where the filler is clay.

3. A flame retardant polyphenylene ether composition in accordance with claim 1, where the filler is fumed titanium oxide.

4. A flame retardant polyphenylene ether composition in accordance with any preceding claim, where the polydiorganosiloxane fluid is a polydimethylsiloxane fluid.

5. A flame retardant blend in accordance with any preceding claim, where the polyphenylene ether is the oxidative coupling product of 2,6-xylenol.

6. A flame retardant blend in accordance with any preceding claim, wherein the impact modifier is a block copolymer of polystyrene and polybutadiene.

7. A flame retardant blend in accordance with any preceding claim, wherein the plasticizer is a tetrabenzoate ester of pentaerythritol.

8. A flame retardant blend in accordance with any one of claims 1 to 6 where the plasticizer is polyoctahylene.

European Patent Office

# EUROPEAN SEARCH REPORT

Application Number
EP 93 30 9932

| Category | Citation of document with indication, where appropriate, of relevant passages | Relevant to claim | CLASSIFICATION OF THE APPLICATION (Int.Cl.5) |
|---|---|---|---|
| P,Y, D | EP-A-0 551 731 (GENERAL ELECTRIC CO.)<br>* claims 1-5; example 1 * | 1-7 | C08L71/12<br>C08K9/08 |
| Y | US-A-5 095 060 (HAAF W.R.)<br>* claims 1,10,12 *<br>* column 9, line 8 - line 14 * | 1-7 | |
| Y | DATABASE WPI<br>Derwent Publications Ltd., London, GB;<br>AN 89-190296<br>& JP-A-1 130 515 (MATSUSHITA ELECTRIC CO.)<br>23 May 1989<br>* abstract * | 1-7 | |
| A | DE-A-21 38 027 (UNIROYAL INC.)<br>* claims 1-4,22 *<br>* page 8, line 1 - line 5 * | 1-6 | |
| A | EP-A-0 501 156 (GENERAL ELECTRIC CO.)<br>* claims 1-3 *<br>* page 4, line 6 - line 9 * | 1-6 | TECHNICAL FIELDS SEARCHED (Int.Cl.5) |
| A | EP-A-0 243 991 (GENERAL ELECTRIC CO.)<br>* claims 1,4 *<br>* page 10, line 14 - line 17 * | 1,6 | C08L<br>C08K |

The present search report has been drawn up for all claims

| Place of search | Date of completion of the search | Examiner |
|---|---|---|
| THE HAGUE | 17 February 1994 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)